# EUROPEAN PATENT APPLICATION

(11) **EP 4 597 067 A1**
(43) Date of publication of application: **06.08.2025**
(21) Application number: 24155736.2
(22) Date of filing: 05.02.2024
(51) Int. Cl.: G01M 13/04

(54) **CONDITION MONITORING ARRANGEMENT**

(71) Applicant: Siemens Gamesa Renewable Energy A/S, 7330 Brande (DK)
(72) Inventor: Nielsen, Jesper Hjortshøj, 8653 Them (DK); Orlowitz, Esben, 7200 Grindsted (DK)
(74) Representative: SGRE-Association

(57) **Abstract**

The invention describes a condition monitoring arrangement (1) of a fluid-film bearing (20) arranged to support the generator (21, 22) of a direct-drive wind turbine (2), comprising a plurality of bearing activity sensors (10), each arranged to collect bearing activity data (10D) during operation of the wind turbine (2); a local data evaluation arrangement (11, 12) adapted for installation in the wind turbine (2) and comprising a data reduction module (11) adapted to reduce the quantity of collected bearing activity data (10D); and a threshold comparator (12) configured to compare the reduced bearing activity data (10D_{red}) with a number of threshold values (121) to obtain threshold comparator output (1213, 1214) for use as a basis upon which to control that wind turbine (2). The invention further describes a method of monitoring the condition of a fluid-film bearing (20) arranged to support the generator (21, 22) of a direct-drive wind turbine (2); and a direct-drive wind turbine (2) comprising an instance of the inventive condition monitoring arrangement (1).

## Description

### Background

Machinery with rotating parts can deploy various kinds of bearing, and the choice of bearing can depend on various factors such as the type and magnitude of the expected loads, the speed of rotation, accessibility for maintenance, etc. During the lifetime of the machinery, it can be advantageous to perform condition monitoring so that potential problems can be detected early on, allowing maintenance work to be carried out in good time and avoiding unscheduled downtime. In the case of a roller bearing, for example, condition monitoring can be done by mounting accelerometers or transducers on the bearing case and collecting measurements during operation of the bearing. The data collected by such case-mounted sensors can be processed to detect any deviation from the expected signal types. For example, an alteration in one of the kinematic frequencies defined by the bearing geometry can be indicative of a damaged roller.

A fluid-film bearing can be used instead of a roller bearing for various applications, for example in a hydro-electric power plant, a ship's drivetrain, a wind turbine gearbox, etc. In such applications, a fluid-film bearing generally supports a component that rotates without interruption for a relatively long period of time, for example over many hours or even days. Condition monitoring of such fluid-film bearings can be difficult, and it is generally not possible to deploy systems such as those used for condition monitoring of roller bearings. For example, the non-linear mode of force transfer from the bearing interior to its housing would mean that any measurements collected by a case-mounted sensor would also contain irrelevant information. Heat sensors can collect temperature measurements that are useful up to a point, but thermal lag may result in bearing failure occurring before the data can be evaluated. Condition monitoring of fluid-film bearings can be done by an arrangement of proximity probes, for example two proximity probes oriented 90° apart. Such an arrangement of probes makes it possible to monitor the position of the rotating part relative to the stationary part, i.e. to perform orbit analysis.

However, while the above techniques can obtain useful data for condition monitoring of relatively small fluid-film bearings in the high sliding-speed applications mentioned above, they are only of limited usefulness in the case of a large fluid-film bearing in a low sliding-speed and high pressure application such as the generator of a direct-drive wind turbine, which can have very long rotor blades (e.g. in the order of 80 m or more) and a rotor with a correspondingly low rotational speed. The high pressure in the fluid film is a result of the large rotor acting on the oil film between the stationary and rotary bearing parts. In the case of a direct-drive wind turbine, the rotational velocity of the aerodynamic rotor - which in turn determines the sliding speed of a fluid film bearing - can be even lower than 1 revolution per minute (rpm), with a maximum rated rotational velocity of only a few rpm. In such an application, meaningful condition monitoring of a fluid film bearing is made difficult because of the slow dynamic response, and the health condition of the bearing is therefore difficult to determine. Furthermore, the large dimensions of the bearing in such an application makes known methods such as orbit analysis challenging to implement, because of the inherent stiffness of the large bearing parts.

It is therefore an object of the invention to provide reliable conditioning monitoring for a large fluid-film bearing in a slow-speed application.

This object is achieved by the claimed condition monitoring arrangement; by the claimed method of monitoring the condition of a fluid-film bearing; and by the claimed wind turbine.

### Description

According to the invention, the condition monitoring arrangement of a fluid-film bearing arranged between the rotor and stator of the generator of a direct-drive wind turbine, comprising a plurality of bearing activity sensors, each arranged to collect bearing activity data during operation of the wind turbine, and a local data evaluation arrangement comprising a data reduction module and a threshold comparator. The data reduction module is adapted to reduce the quantity of collected bearing activity data; and the threshold comparator is configured to compare the reduced quantity of bearing activity data with a number of threshold values. These modules are realized entirely in the wind turbine, i.e. locally. The output of the threshold comparator can, for example, be passed essentially directly to a "local decision-making module" that is realized as part of the wind turbine controller.

In this way, the results of the threshold comparator can be used by the wind turbine controller, which can therefore quickly respond to developments in bearing activity by issuing appropriate references to the various components of the wind turbine, and/or by updating these references.

In the context of the invention, the monitoring arrangement preferably comprises a suitable interface over which at least the reduced bearing activity data can be transmitted from the wind turbine to a remote data evaluator. With the inventive approach, the reduced bearing data can be evaluated entirely locally, so that a rapid or "short term" response can be made should the need arise; and the reduced bearing data can also be evaluated by a remote data evaluator as will be explained below, allowing a "long term" health assessment of the bearing to be made.

An advantage of the inventive monitoring arrangement is that it provides a way of performing condition monitoring for a large-scale, low-speed and high pressure fluid-film bearing, allowing such a fluid-film bearing to be deployed as a main bearing in a large direct-drive wind turbine, i.e. an application for which roller bearings may result in high replacement and/or maintenance costs. The inventive monitoring arrangement can make a valuable contribution towards reducing the maintenance costs of such a wind turbine, since the operator will be able to make reliable health assessments during the service life of the bearing.

According to the invention, the method of monitoring the condition of such a fluid-film bearing comprises the steps of arranging each of a plurality of activity sensors to collect bearing activity data during operation of the wind turbine; reducing the quantity of collected bearing activity data; comparing the reduced bearing activity data with a number of threshold values; and locally controlling the wind turbine on the basis of a threshold comparator output.

An advantage of the inventive approach is that the steps of reducing and locally evaluating the data makes it possible to deploy a favourably large number of sensors that can be arranged to collect various kinds of information that can contribute to forming as assessment of the health of the fluid-film bearing.

According to the invention, the direct-drive wind turbine comprises a fluid-film bearing arranged to support the generator, i.e. the inner diameter of the bearing essentially corresponds to the diameter of the stator shaft. The wind turbine further comprises an instance of the inventive condition monitoring arrangement.

The invention further comprises a computer program product with a computer program that is directly loadable into a memory of a processor installed locally, and can for example be realised for execution by the wind turbine controller. The computer program comprises relevant program elements for performing steps of the inventive method when executed by the processor. The invention can be regarded as an "edge computing" application, since it allows early stages of bearing data processing to be realised closer to the data source (the bearing and its activity sensors), instead of evaluating such data exclusively at a remote location (e.g. at a back-office or park controller, generally far away from the wind turbine), thereby improving response times and saving bandwidth, since it is not necessary to export the entire quantity of bearing activity data to a remote data evaluator.

Particularly advantageous embodiments and features of the invention are given by the dependent claims, as revealed in the following description. Features of different claim categories may be combined as appropriate to give further embodiments not described herein.

In the following, it may be assumed that the fluid-film bearing is a hydrodynamic bearing, and these terms may be used interchangeably. The fluid-film bearing can have self-aligning pads. In a direct-drive wind turbine, the fluid-film bearing can be assumed to have a large diameter, for example in the order of 4 metres. Such a large fluid-film bearing shall be understood to be designed for a sliding speed of at most 2 m/s, and may frequently operate at a sliding speed as low as 0.01 m/s.

In a particularly preferred embodiment of the invention, the bearing activity sensors comprise a number of accelerometers and/or a number of proximity sensors and/or a number of force sensors mounted to the fluid-film bearing. The bearing activity sensors are preferably positioned so that bearing activity data regarding thrust loads and radial loads can be collected as a basis for the condition monitoring. The expressions "bearing activity data" and "bearing data" may be used interchangeably herein.

At the very minimum, the sensor arrangement comprises one sensor mounted to measure a physical parameter such as pressure, acceleration, etc. in the radial direction, and another sensor mounted to measure the same physical parameter in the axial direction. The two sensors therefore generate two streams of raw bearing data. In a more comprehensive configuration, the sensor arrangement might additionally comprise any number of additional sensors, each generating a stream of raw bearing data.

In an initial step of data acquisition, each bearing activity sensor detects a physical parameter (e.g. pressure, acceleration, etc.) and outputs an electrical signal (e.g. a voltage) which is sampled and converted into a digital numeric value. The result of the data acquisition stage can be multiple channels or streams of raw (i.e. unprocessed) data, for example one channel or stream per bearing activity sensor. The various types of bearing activity sensor may have different sampling rates, for example one sensor may sample at a rate of ten samples per second, while another sensor may sample at a rate of one sample per minute, etc. The digital signals from the data acquisition stage can be delivered essentially continuously to the subsequent reduction stage of the inventive monitoring arrangement, in which the data reduction module (or "data concentrator" in the following) reduces the quantity of raw data. In a preferred embodiment of the invention, the data concentrator can apply one or more techniques to reduce the quantity of data while retaining the information content of the data. For example, the data concentrator can be adapted to filter a data stream and/or to compute a root-mean-square of a data stream and/or to differentiate a data stream (to compute its first-order derivatives, its second-order derivatives etc.), and/or to perform orbit analysis on a data stream and/or to perform cepstrum analysis on a data stream. Each stream or channel can be processed separately, i.e. the data from each individual bearing activity sensor is concentrated independently of the other data streams. The data concentrator can be regarded as a pre-processing stage. For each input data stream, the data reduction module outputs a reduced data stream, i.e. a stream of data with a significantly lower data bandwidth or information rate. The expressions "reduced data", "reduced data stream", "reduced bearing data" etc. shall be understood as a concentrated quantity of bearing activity data with a significantly lower data bandwidth than the raw sensor data.

During most of the wind turbine's service life, each of its components can be expected to operate normally, i.e. within the relevant "safe zone". Even so, various physical parameters must be monitored in order to detect a problem before it becomes serious, and for this reason data is continually collected from various sensors. In an exemplary situation for a direct-drive wind turbine with a fluid-film bearing, multiple sensors may be used to measure physical bearing parameters such as pressure, acceleration, etc. and, in an exemplary embodiment, a sensor may sample at a rate of up to 30,000 samples per second, with each digitized sample being encoded using 16 - 24 bits or more. Clearly, even a basic arrangement with only a small number of sensors will result in a vast quantity of raw data which can be extremely expensive to store (requiring large memory capacity) and to transmit (requiring large bandwidth). Generally, only a relatively small fraction of such raw data streams can be expected to be of significance, i.e. only a small fraction of the data would suffice to obtain an assessment of the bearing health.

As long as a sensor reports an essentially constant (and normal) value, nothing need be undertaken. However, if the measured parameter departs from an expected value, some action may need to be taken. To this end, in a subsequent step, the threshold comparator compares each reduced data stream with a relevant threshold value. Each bearing activity sensor may have a corresponding threshold, for example one accelerometer could have a threshold of x m/s² rms and another accelerometer could have a threshold of y m/s² rms, x and y not necessarily being equal, and a pressure sensor can have a threshold of z Pa. This step of continually comparing the reduced bearing activity data with various thresholds is carried out at the wind turbine level, and can therefore be regarded as an edge computing step.

In this way, any unusual or unexpected changes for each sensor (i.e. for each monitored physical parameter) can quickly be identified and "singled out", i.e. the data reduction module effectively reduces or concentrates the data to a manageable amount while retaining important content, and the threshold comparator can easily detect any departure from an expected value. At the wind turbine level, a local decision-making module can then control the wind turbine on the basis of the threshold comparator output. For example, a fault such as a groove in a bearing raceway could cause instabilities in the oil film, leading to acceleration levels that can be detected by a suitably-positioned accelerometer, and subsequently, on the basis of one or more unexpected acceleration values identified by the threshold comparator in the reduced data stream, the wind turbine controller may decide to reduce the load on the bearing to avoid more serious damage developing as a result.

Even during normal operation of a wind turbine, the various monitored physical parameters can be expected to vary. For example, a temperature in the bearing may follow a curve determined by the wind speed between the cut-in wind speed and the rated wind speed for that wind turbine, since the temperature in the generator is directly related to its power output. Similarly, the behaviour of a monitored physical parameter may depend to some extent on the power output of the wind turbine. Therefore, in a particularly preferred embodiment of the invention, a threshold value is adjusted on the basis of a temperature (measured in or near the bearing) and/or on the basis of the power output of the wind turbine and/or on some other ancillary parameter as will be explained below. In this way, the edge computing stage of the inventive condition monitoring arrangement can quickly and reliably reach decisions on the basis of the threshold comparator output.

In a particularly preferred embodiment of the invention, the condition monitoring arrangement further comprise a remote data evaluator configured to evaluate the reduced bearing activity data and to issue recommendations/commands to the local wind turbine controller on the basis of that evaluation. The remote data evaluator shall be understood to be realised at a remote location, for example as part of a wind park control arrangement managed by an operator of the wind park. The remote data evaluator can issue recommendations or commands as appropriate to the wind turbine controller.

In this case, in addition to the local sensor arrangement, data reduction module, threshold comparator and data evaluation module, the invention comprises a computer program, referred to herein as the remote data evaluator, that can be executed at the back-office or park controller. The invention therefore comprises a locally deployed "edge computing" architecture for rapid response to unexpected bearing activity data values, which can be augmented by a long-term data evaluation realised at a remote location.

The collected sensor data can be evaluated in various ways by the remote data evaluator. In this case also, there is no need to export the entire quantity of raw data, and instead the reduced bearing activity data is transmitted to the remote data evaluator.

In a preferred embodiment of the invention, the remote data evaluator applies one or more suitable post-processing techniques such as tracking tools to extract more information from the reduced bearing activity data. To this end, the remote data evaluator can perform a trend analysis on a series of reduced bearing activity data values in order to identify a trend; the remote data evaluator can perform an outlier analysis on a series of reduced bearing activity data values in order to identify any outlier; the remote data evaluator can apply a classification technique to a series of reduced bearing activity data values in order to categorize the health condition of the bearing (for example by presenting the bearing health as a condition number); the remote data evaluator may apply a regression technique configured to predict the likelihood of changes in the health condition (e.g. whether further deterioration can be expected, or whether an improvement may be achieved). To this end, the remote data evaluator can apply a suitable machine learning tool. On the basis of the result of any of these post-processing techniques, the remote data evaluator can adjust the wind turbine's operation as appropriate, for example by issuing a suitable power reference to reduce the output power if a temperature threshold has been exceeded.

As explained above, the reduced bearing activity data can be compared to appropriate thresholds in the edge computing stage so that the wind turbine controller can quickly identify unexpected developments in the fluid-film bearing and can react accordingly, for example by reducing the rotor speed or even halting the wind turbine.

In a preferred embodiment of the invention, the remote data evaluator uses the received threshold comparator outputs to determine appropriate operating modes for the respective wind turbine, to schedule maintenance routines, etc. To this end, the threshold comparator is configured to apply a further set of threshold values to generate threshold comparator output specifically for the remote data evaluator. Compared to the threshold values used locally by the wind turbine controller in the edge computing stage, the threshold values used for the remote data evaluator can be more stringent. This allows the local decision-making module to quickly respond to measurements that leave the normal range within a short space of time, while more gradual progressions can be assessed in a nuanced manner by the remote data evaluator. For example, a parameter (in the reduced bearing activity data) may have a measured value of 80. The local threshold for this parameter is 100, and the remote threshold is 50. The local decision-making module will not react to this elevated value, since it is "not high enough". The remote data evaluator notes that the parameter value is elevated above the threshold of 50, and can respond accordingly, for example to include a suitable inspection procedure during the next scheduled maintenance visit. However, if the parameter has a measured value above 100, the local decision-making module can immediately respond, for example by reducing the rotor speed and issuing an alarm to the park controller.

The performance of the fluid-film bearing can depend not just on the physical parameters measured by the sensors, but may also depend on various other factors. Therefore, in a particularly preferred embodiment of the invention, the wind turbine uses ancillary data normally collected during operation of the wind turbine, and the ancillary data is also used in the decision-making process. Ancillary data can be a relevant temperature, for example the temperature of the bearing, the bearing housing, the generator, an ambient temperature, etc. a particle count (relating to particles in the bearing oil), wind speed, rotor speed, momentary power output, etc. One or both of the local and remote data evaluators may avail of the ancillary data in order to arrive at decisions regarding the wind turbine operation.

In a preferred embodiment of the invention, the local data evaluator and/or the remote data evaluator can output a condition number to describe the state of the fluid-film bearing. In each case, the condition number can be determined on the basis of the corresponding threshold comparator output. For example, a condition number from 1 to 5 can be used to describe the state of the hydrodynamic bearing: here, condition number 1 can mean that the bearing is operating normally; condition number 2 can indicate that the bearing should be checked at the next scheduled service visit to the wind turbine; condition number 3 can mean that a service visit should be scheduled soon, but the wind turbine can continue to operate at normal production; condition number 4 can mean that a service visit should be scheduled soon and the wind turbine will operate at reduced power output until then; condition number 5 can mean there is a serious problem and the wind turbine will be stopped. A condition number determined by the remote data evaluator can be sent to the respective wind turbine, which can use this as a basis from which to compute power references, for example.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 3 illustrate exemplary embodiments of the inventive condition monitoring arrangement;
Figure 4 shows a prior art condition monitoring arrangement.

In the diagrams, like numbers refer to like objects throughout. Objects in the diagrams are not necessarily drawn to scale.

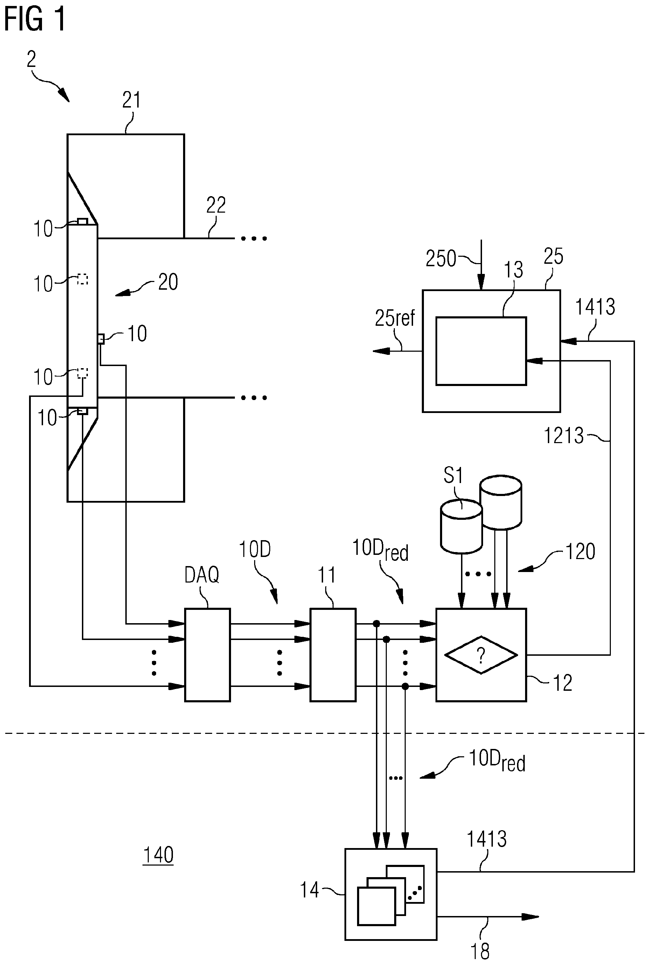

Figure 1 shows a simplified block diagram of the inventive condition monitoring arrangement 1 as deployed in a direct-drive wind turbine 2. The diagram shows a hydrodynamic bearing 20 arranged between the rotor 21 and stator 22 at the drive end of the wind turbine generator. The bearing 20 can be assumed to have a diameter of several metres. The condition monitoring arrangement 1 comprises various bearing activity sensors 10 arranged to collect bearing activity data during operation of the wind turbine 2. The analog values detected by the sensors 10 are converted in a DAQ into digitized streams of raw bearing activity data 10D. Each sensor 10 converts a physical parameter into an electrical signal. As the skilled person will know, a DAQ generally comprises circuitry to convert such sensor signals into digital values 10D, for example an analogue voltage signal can be sampled at a suitable rate and converted to a "raw" 32-bit digital signal.

In this exemplary embodiment, a relatively small number of sensors 10 generates a corresponding number of raw data streams 10D. A data reduction module 11 reduces or concentrates the raw bearing activity data 10D without losing any relevant content. This can be done by various data-processing algorithms such as filtering, rms calculation, differentiation, etc. The reduced bearing activity data 10D_{red} (i.e. the same number of data streams but at significantly reduced data bandwidths) is forwarded to a threshold comparator 12 which compares each incoming digital value 10D_{red} with a corresponding threshold value 121.

A local decision-making module 13, which can be a module of the local wind turbine controller, examines the output 1213 of the threshold comparator 12 and controls the wind turbine 2 accordingly. For example, the local decision-making module 13 may conclude that the wind turbine should operate at reduced power output until the hydrodynamic bearing 20 can be serviced, or that the bearing 20 has a serious fault and the wind turbine 2 should be stopped until the fault can be repaired. The various components of the wind turbine 2 are controlled using references 25ref generated by the wind turbine controller 25.

The threshold values 121 used in local data evaluation can be stored in a memory S1 as shown here, and can be updated by the wind turbine controller 25 as appropriate, depending on relevant factors such as wind turbine power output, generator temperature, wind speed etc., as well as any other relevant operational and/or environmental parameters.

A wind turbine is generally equipped with ancillary sensors arranged to measure various parameters during operation of the wind turbine. The diagram indicates ancillary data 250 from such sensors being input to the wind turbine controller 25 for use in the decision-making process.

The diagram also shows a remote data evaluator 14 which also receives the reduced bearing activity data 10D_{red}. The optional remote data evaluator 14 can be realised at a park controller 14R of a wind park, for example. In this exemplary embodiment, the remote data evaluator 14 is adapted to perform one or more post-processing actions such as trend analysis, outlier analysis, classification, regression etc. On the basis of the post-processing outcome(s), the remote data evaluator 14 can issue appropriate recommendations 1413 to the wind turbine 2. The remote data evaluator 14 can also output a concise indication of the bearing health, for example in the form of a condition number 18 as described above. The condition number of a wind turbine can be forwarded to the respective wind turbine controller, which can take it into consideration with other parameters (e.g. wind speed) when adjusting its power references.

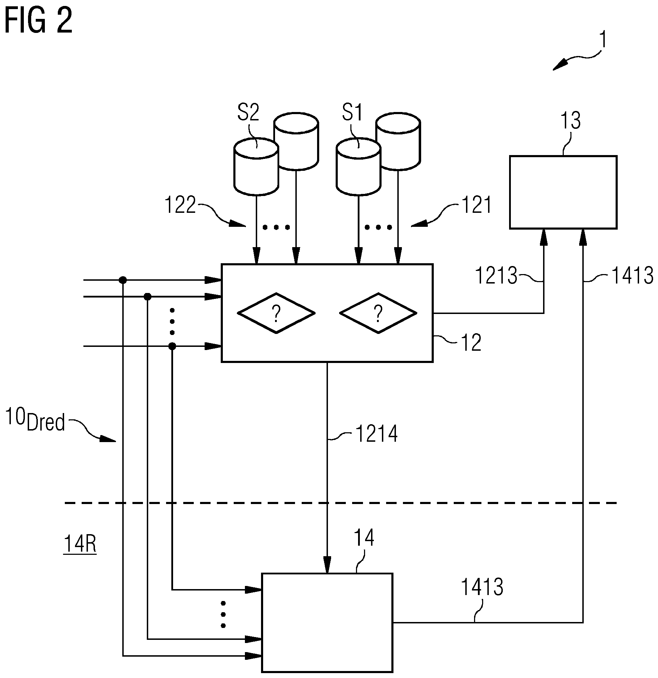

Figure 2 shows a further exemplary embodiment of the inventive condition monitoring arrangement 1. Here, in addition to receiving the reduced bearing activity data 10D_{red}, the remote data evaluator 14 also receives the results 1214 of threshold comparison from a wind turbine. To this end, in addition to the set S1 of threshold values 121 described above, the threshold comparator 12 compares each incoming digital value 10D_{red} with a threshold value 122 from a second, less stringent set S2 of threshold values. The outcome 1214 of this threshold comparison step is transmitted to the remote data evaluator 14, which can react accordingly, for example by issuing appropriate recommendations 1413 and establishing a condition number 18 which can also be sent to the wind turbine 2. It shall be understood that the remote data evaluator 14 can receive reduced bearing activity data and threshold comparison results from all wind turbines of a wind farm, and can issue recommendations 1413 and establish a condition number 18 for each wind turbine 2.

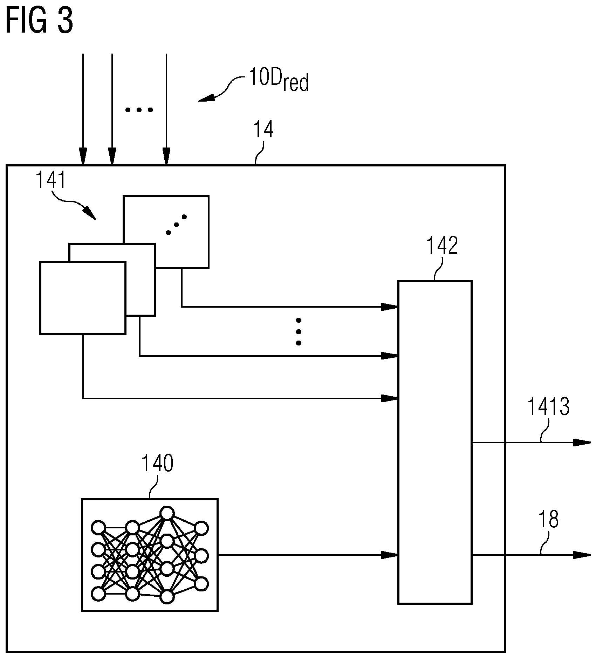

Figure 3 shows a further possible embodiment of the remote data evaluator 14. Here, as an alternative or in addition to the post-processing modules 141 described above (e.g. a trend analysis module, an outlier analysis module, a classifier module, etc.), the remote data evaluator 14 can deploy a machine-learning tool 140 to detect anomalies in the reduced bearing activity data 10D_{red}. The various post-processing results can be analysed in a further stage 142 to arrive at conclusions regarding the wind turbine control, and to determine a condition number 18.

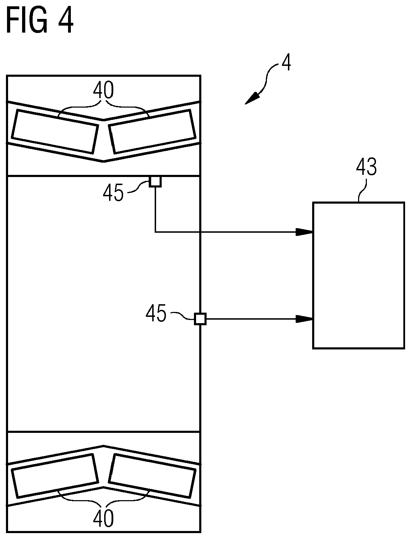

Figure 4 shows a roller bearing 4 which could be deployed between the rotor and stator of a direct-drive wind turbine with a generator that has dimensions similar to those of the embodiment described in Figure 1. Condition monitoring of this type of bearing 4 is well established, for example by deploying sensors 45 such as case-mounted accelerometers to monitor vibration in the bearing 4. Various kinds of damage to the bearing 4, for example deterioration of the rollers 40, can be deduced (in a local or remote module 43) from easily-detected changes in the data delivered by the sensors 45, for example by changes in kinematic frequencies that are clearly defined by the bearing geometry. Damage to this type of bearing 4 is therefore easily detected and generally does not occur suddenly, but instead develops over time, giving the operator sufficient opportunity to undertake preventive measures. This prior art approach to condition monitoring is suitable for roller bearings, but is unsuitable for fluid-film bearings. This is because, unlike in a roller bearing, the force transmission path to a case-mounted sensor is highly non-linear.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A condition monitoring arrangement (1) of a fluid-film bearing (20) arranged to support the generator (21, 22) of a direct-drive wind turbine (2), comprising
- a plurality of bearing activity sensors (10), each arranged to collect bearing activity data (10D) during operation of the wind turbine (2); and
- a local data evaluation arrangement (11, 12) adapted for installation in the wind turbine (2);
which local data evaluation arrangement (11, 12) comprises
- a data reduction module (11) adapted to reduce the quantity of collected bearing activity data (10D); and
- a threshold comparator (12) configured to compare the reduced bearing activity data (10D_{red}) with a number of threshold values (121) to obtain threshold comparator output (1213, 1214) for use as a basis upon which to control that wind turbine (2).

2. A condition monitoring arrangement according to the preceding claim, further comprising a local decision-making module (13) configured to control the wind turbine (2) on the basis of a threshold comparator output (1213).

3. A condition monitoring arrangement according to any of the preceding claims, wherein the data reduction module (11) is adapted to filter the bearing activity data (10D) and/or to compute a root-mean-square of the bearing activity data (10D) and/or to differentiate the bearing activity data (10D) and/or to perform orbit analysis on the bearing activity data (10D) and/or to perform cepstrum analysis on the bearing activity data (10D).

4. A condition monitoring arrangement according to any of the preceding claims, further comprising a remote data evaluator (14) configured to evaluate the reduced bearing activity data (10D_{red}) and to issue recommendations (1413) regarding control and maintenance planning of the wind turbine (2) on the basis of that evaluation.

5. A condition monitoring arrangement according to claim 4, wherein the remote data evaluator (14) is configured to perform trend analysis on the reduced bearing activity data (10D_{red}) .

6. A condition monitoring arrangement according to any of claims 4 to 5, wherein the threshold comparator (12) is configured to apply a first set (S1) of threshold values (121) to generate threshold comparator output (1213) for the local decision-making module (13); and to apply a second set (S2) of threshold values (122) to generate threshold comparator output (1214) for the remote data evaluator (14).

7. A condition monitoring arrangement according to the preceding claim, wherein a threshold value of the first set (S1) is less stringent that a corresponding threshold value of the second set (S2).

8. A condition monitoring arrangement according to any of the preceding claims, comprising a number of ancillary sensors arranged to collect ancillary data (250) during operation of the wind turbine (2), wherein ancillary data (250) comprises any of: momentary power output; temperature data; an oil particle count; wind speed; rotor speed.

9. A method of monitoring the condition of a fluid-film bearing (20) arranged to support the generator (21, 22) of a direct-drive wind turbine (2), which method comprises
- arranging each of a plurality of bearing activity sensors (10) to collect bearing activity data (10D) during operation of the wind turbine (2);
- reducing the quantity of collected bearing activity data (10D); and
- comparing the reduced bearing activity data (10D_{red}) with a number of threshold values (121) to obtain threshold comparator output (1213, 1214) for use as a basis upon which to control that wind turbine (2);
**characterized in that** the data reduction and comparison steps are preformed locally in the wind turbine (2).

10. A method according to the preceding claim, wherein a threshold value (121, 122) is adjusted on the basis of ancillary data collected for that wind turbine (2).

11. A method according to claim 9 or claim 10, comprising a subsequent step of passing the threshold comparator output (1213) to the wind turbine controller (25).

12. A direct-drive wind turbine (2) comprising a fluid-film bearing (20) arranged between the rotor (21) and the stator (22) of its generator, and further comprising a condition monitoring arrangement (1) according to any of claims 1 to 8.

13. A direct-drive wind turbine according to the preceding claim, wherein the fluid-film bearing (20) is a hydrodynamic bearing.

14. A direct-drive wind turbine according to claim 12 or claim 13, wherein the fluid-film bearing (20) is adapted for a sliding speed of at most 2 m/s.

15. A computer program product comprising a computer program that is directly loadable into a memory module of a condition monitoring arrangement (1) according to any of claims 1 to 8, and wherein the computer program comprises program elements for performing steps of the method according to any of claims 9 to 11 when executed by a processor of the condition monitoring arrangement (1).
